# EUROPÄISCHE PATENTSCHRIFT

(11) **EP 1 048 778 B1**
(45) Veröffentlichungstag und Bekanntmachung des Hinweises auf die Patenterteilung: **21.06.2006**
(21) Anmeldenummer: 00107220.6
(22) Anmeldetag: 01.04.2000
(51) Int. Cl.: D06M 15/667

(54) **Fasermaterialien mit einer Brandschutzbeschichtung**
Fibrous materials with a fire resistant coating
Matériaux fibreux avec un revêtement ignifugeant

(30) Priorität: 30.04.1999 DE 19919707
(43) Veröffentlichungstag der Anmeldung: 02.11.2000
(73) Patentinhaber: Clariant Produkte (Deutschland) GmbH, 65929 Frankfurt am Main (DE)
(72) Erfinder: Pirig, Wolf-Dieter, 53879 Euskirchen (DE); Thewes, Volker, 40789 Monheim (DE)

(56) Entgegenhaltungen:
- WO-A-00/02869
- WO-A-97/44377
- WO-A-99/11702
- GB-A- 2 272 444
- DATABASE WPI Section Ch, Week 199840 Derwent Publications Ltd., London, GB; Class A18, AN 1998-463402 XP002143899 & JP 10 195774 A (KURARAY PLASTICS KK), 28. Juli 1998 (1998-07-28)

## Beschreibung

Die Erfindung betrifft Fasermaterialien mit einer Brandschutzbeschichtung enthaltend mindestens ein filmbildendes Bindemittel und ein Flammschutzmittel.

Fasermaterialien, beispielsweise in Form textiler Flächengebilde, wie Gewebe für Vorhänge, Teppichböden, Autositzbezüge, Eisenbahnsitze, Kinderbettbezüge usw. bestehend aus beispielsweise Baumwolle, Cellulose-, Polyester-, Polyethylen-, Polyamid-, Polypropylenfasern oder Fasergemische, sind im Brandfall leicht entflammbar.

Es ist bekannt, Textilien mit Zusammensetzungen von Dekabromdiphenylether und anderen Flammschutzmitteln, wie Antimontrioxid und Aluminiumtrihydrat in Form wäßriger dispersionen zu behandeln, um ihnen flammhemmende Eigenschaften zu verleihen. Diese Beschichtungen sind halogenhaltig und damit in vielen Fällen, insbesondere für Textilien, mit denen Kinder in Berührung kommen, nicht verwendbar.

Es ist daher bereits vielfach versucht worden, diese halogenhaltigen Produkte durch halogenfreie zu ersetzen. So sind halogenfreie Produkte, die für die Flammfestausrüstung von Textilien bereits verwendet wurden, die bekannten Ammonium- und Natriumsalze der Phosphorsäure.

Der Nachteil dieser Produkte besteht darin, daß sie einerseits auf Fasermaterialien keinen zufriedenstellenden Effekt bezüglich flammhemmender Wirkung ergeben, und daß sie andererseits aufgrund ihrer hohen Wasserlöslichkeit sehr schnell ausgewaschen werden.

Entsprechende Zusammensetzungen auf der Basis von Ammoniumpolyphosphat haben hier bereits zu einem positiveren Ergebnis geführt, soweit es die Effektivität der flammhemmenden Wirkung und die Wasserlöslichkeit betrifft, sind aber auch noch nicht voll zufriedenstellend. So neigt Ammoniumpolyphosphat bei Feuchtigkeit zum Kleben (Froschgriff).

Eine Gewebeplane mit einer flammhemmenden Schutzschicht ist auch bereits in der JP-A 10195774 (Kuraray) beschrieben. Für einen wirksamen Flammschutz wird dort aber eine synergistische Kombination aus rotem Phosphor und Melaminphosphat eingesetzt.

Es ist daher Aufgabe der vorliegenden Erfindung, Fasermaterialien mit einer Brandschutzbeschichtung zur Verfügung zu stellen, die die genannten Nachteile vermeidet und sowohl bezüglich der Flammschutzwirkung als auch bezüglich des "Froschgriffs" den bisherigen Zusammensetzungen gleichwertig bzw. - bei Halogenfreiheit - überlegen ist.

Diese Aufgabe wird gelöst durch Fasermaterialien der eingangs genannten Art, dadurch gekennzeichnet, daß das Flammschutzmittel Melaminpolyphosphat enthält und dass
es sich bei dem filmbildenden Bindemittel um Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester,
Copolymerisate auf Basis Vinylacetat und Acrylsäureester und/oder
Copolymerisate auf Basis Acrylsäureester,
Vinyltoluol/Acrylat-Polymer,
Styrol/Acrylat-Polymere,
Vinyl/Acrylat-Copolymere und/oder
selbstvernetzende Polyurethan-Dispersionen handelt.

Die WO 00/52104, die als Zwischenliteratur im Sinne von Art. 54(3) und (4) EPÜ für die Voraussetzung der Patentfähigkeit gemäß Art. 56 EPÜ außer Betracht bleibt, beschreibt eine dämmschichtbildende Brandschutzbeschichtung, die neben einem Flammschutzmittel auch ein filmbildendendes Bindemittel enthält. Als Flammschutzmittel ist in der WO Melaminpolyphosphat beschrieben, während für das filmbildende Bindemittel eine Reihe von Verbindungen angeführt sind, die auch nach der vorliegenden Erfindung eingesetzt werden. Die WO beschreibt aber nicht, dass die dort beschriebene dämmschichtbildende Brandschutzbeschichtung für Fasermaterialien eingesetzt werden soll, sondern sie wird als geeignet für Stahl, Holz, Elektrokabel und Rohre beschrieben.

Bevorzugt entspricht das Melaminpolyphosphat der Formel (HMPO3)ₙ, in der M für Melamin steht und n ≥ 2, insbesondere 2 bis 10.000 ist

Bei Melaminpolyphosphat handelt es sich um ein Polymer aus Melamin- und Phosphateinheiten, die zu kürzeren und längeren Ketten verknüpft sind. Die Verteilung der Melamin- und Phosphateinheiten kann regelmäßig oder unregelmäßig sein, sie können gegebenenfalls auch in sich selber polymerisiert sein. Es können auch Derivate des Melamins, wie Melem, Melam und andere enthalten sein.

Entsprechend seiner unterschiedlichen Kettenlänge und der Verteilung bzw. Häufung der Melamin- und Phosphateinheiten kann das Melaminpolyphosphat in seinen Eigenschaften innerhalb gewisser Grenzen variieren.

Melaminpolyphosphat ist beispielsweise in der PCT/WO 98/45364 näher beschrieben, es wird dort auch als Melaminsalz der Polyphorsäure bezeichnet, wobei die polymere Kette aus (HMPO₃)-Einheiten [M steht für Melamin] besteht und n ≥ 2, insbesondere 5 bis 10.000 ist.

Melaminpolyphosphat wird üblicherweise durch Erhitzen von Melaminpyrophosphat unter Stickstoffatmosphäre bei Temperaturen von 290 °C und mehr bis zur Gewichtskonstanz erhalten (PCT/WO 98/08898).

Bevorzugt handelt es sich bei dem filmbildenden Bindemittel um Polyvinylacetat-Copolymere oder um Polyacrylate.

Bevorzugt beträgt das Mengenverhältnis von filmbildenden Bindemittel (100%ig) zu Melaminpolyphosphat (10 bis 1) zu (1 bis 5).

Besonders bevorzugt beträgt das Mengenverhältnis von filmbildenden Bindemittel (100%ig) zu Melaminpolyphosphat (5 bis 1) zu (1 bis 3).

Bevorzugt sind als weitere Komponenten Wasser sowie ggf. übliche Hilfs- und Zusatzstoffe enthalten.

Bevorzugt sind als Hilfs- und Zusatzstoffe Dispergiermittel, Schaummittel, Schaumstabilisatoren, Verdicker, Fungizide und / oder Entschäumer enthalten.

Bevorzugt handelt es sich bei den Fasermaterialien um Gewebe für Vorhänge, Teppichböden, Auto- und Eisenbahnsitzbezüge oder Kinderbettbezüge, bestehend aus Baumwolle, Cellulose-, Polyester-, Polyethylen-, Polyamid-, Polypropylenfasern und/oder anderen Fasergemische handelt.

Entsprechend den nachfolgenden Beispielen wird jeweils zunächst eine Brandschutzbeschichtung erzeugt, diese in einer bestimmten Dicke auf das entsprechende Fasermaterial aufgetragen (appliziert) und getrocknet. Je nach Art und Zusammensetzung der Brandschutzbeschichtung bzw. der Fasermaterialien des Gewebes wird ggfs. noch aufgeschäumt, getrocknet oder vernetzt.

Die Beschichtungen wurden dann entsprechend den Normen:
- für Brandschutzbestimmungen in Gebäuden nach DIN 4102 Teil 1
- für Automobile nach FMVSS 302
- für Bundesbahn nach DIN 54336
geprüft.

Die Klebefreiheit der applizierten Beschichtungen wurden nach jeweiliger Klimalagerung visuell begutachtet.

Die Erfindung wird anhand der nachstehenden Beispiele erläutert.

### Beispiel 1 (Vergleich)

### Rückseitenbeschichtung für Automobil-Isoliermaterial

| | |
|---|---|
| Polyvinylacetat Dispersion (50 %ig) | 600 g/l |
| Dekabromdiphenylether | 80 g/l |
| Antimontrioxid | 40 g/l |
| Aluminiumtrihydrat | 80 g/l |
| Schaummittel | 5 g/l |

### Applikation:

| | |
|---|---|
| 1. Aufschäumen | |
| 2. Applikationsmenge | 180µm |
| 3. Trocknung | bei 150°C |
| 4. Beschichtungsmenge | 100 g/m² |

Flammtest: FMVSS 302
Ergebnis: SE
Feuchtigkeitstest (Lagerung bei 40 °C und 95 % Feuchte über 24 Std.): kein Kleben

### Beispiel 2 (Vergleich)

| | |
|---|---|
| PVA -Dispersion (50%ig) | 600 g/l |
| Ammoniumpolyphosphat Löslichkeit < 0.1 % | 120 g/l |
| Melamin | 40 g/l |
| Di-Pentaerythrit | 30 g/l |
| Dispergiermittel | 2 g/l |
| Schaummittel | 5 g/l |

### Applikation:

| | |
|---|---|
| 1. Aufschäumen | |
| 2. Applikationsmenge | 180µm |
| 3. Trocknung | bei 150°C |
| 4. Beschichtungsmenge | 100 g/m² |

Flammtest FMVSS 302
Ergebnis: SE
Feuchtigkeitstest (wie bei Beispiel 1): leichtes Kleben, was nach Trocknung verschwindet.

### Beispiel 3

| | |
|---|---|
| PVA-Dispersion (50 %ig) | 600 g/l |
| Melaminpolyphosphat | 160 g/l |
| Schaummittel | 5 g/l |

### Applikation:

| | |
|---|---|
| 1. Aufschäumen | |
| 2. Applikationsmenge | 180µm |
| 3. Trocknung | bei 150°C |
| 4. Beschichtungsmenge | 100 g/m² |

Flammtest: FMVSS 302
Ergebnis: SE
Feuchtigkeitstest (wie Beispiel 1): absolut klebefrei

### Beispiel 4

### Automobil- und Eisenbahnsitzbezüge

| | |
|---|---|
| Polyacrylat Dispersion (45 %ig) | 550 g/l |
| Wasser | 100 g/l |
| Melaminharz | 30 g/l |
| Melaminpolyphosphat | 90 g/l |
| Schaummittel | 3 g/l |
| Schaumstabilisator | 5 g/l |

### Applikation:

| | |
|---|---|
| 1. Aufschäumen | |
| 2. Applikationsmenge | 30g Flammschutzmittel pro 100g Gewebe |
| 3. Trocknung | bei 170°C |

### Flammtest:

a) Eisenbahnsitze Prüfverfahren nach E-DIN 54837
   Ergebnis: S 4, ST 2, SR 2
b) Autositze Prüfverfahren FMVSS 302
   Ergebnis: SE
Feuchtigkeitstest: (wie Beispiel 1 und nach 48 u. 96 Std.) absolut klebefrei

### Beispiel 5

### Teppichrückenbeschichtung

| | |
|---|---|
| PVA-Copolymer Dispersion (50 %ig) | 100 Teile |
| Melaminpolyphosphat | 130 Teile |
| Wasser | 30 Teile |

### Applikation:

| | |
|---|---|
| 1. Applikationsmenge | 300-400 g/m² |
| 2. Trocknung | bei 130°C |

Flammtest: Prüfverfahren nach DIN 54336
Ergebnis: Vertical Test, 3 sec. Beflammung - 0 sec. Nachbrennen

### Beispiel 6

### Ausrüstung von Vorhängen (Baumwollgewebe)

| | |
|---|---|
| Polyacrylat Dispersion | 500 g/l |
| Wasser | 100 g/l |
| Melaminpolyphosphat | 50 g/l |

### Applikation:

1. Applikationsmenge 170 g/m²
2. Verfahren: Foulardierung
   Die Flottenaufnahme betrug nach Abquetschen ca. 70 %, bezogen auf das Gewebegewicht.
3. Trocknung bei 120 °C
4. Vernetzung 2 Minuten bei 170 °C

Flammtest: Prüfverfahren nach DIN 4102 Teil 1
Ergebnis: a) Ausgangsgewebe - B 1 bestanden
   b) nach 5 Waschvorgängen in der Waschmaschine mit handelsüblichem Waschmittel - B1 bestanden
   c) nach 10 Waschvorgängen - wie b) - B1 bestanden
   d) nach 20 Waschvorgängen - wie b) - B1 an der Grenze, aber sehr gut B2

## Patentansprüche

1. Flammgeschützte Fasermaterialien mit einer Brandschutzbeschichtung enthaltend mindestens ein filmbildendes Bindemittel und ein Flammschutzmittel, **dadurch gekennzeichnet, dass** das Flammschutzmittel Melaminpolyphosphat enthält und dass es sich bei dem filmbildenden Bindemittel um Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester, Copolymerisate auf Basis Vinylacetat und Acrylsäureester und/oder Copolymerisate auf Basis Acrylsäureester,
Vinyltoluol/Acrylat-Polymer,
Styrol/Acrylat-Polymere,
Vinyl/Acrylat-Copolymere und/oder
selbstvernetzende Polyurethan-Dispersionen handelt.

2. Flammgeschützte Fasermaterialien nach Anspruch 1, **dadurch gekennzeichnet, dass** das Melaminpolyphosphat der Formel (HMPO₃)ₙ, in der M für Melamin steht und n ≥ 2, insbesondere 2 bis 10.000 ist, entspricht.

3. Flammgeschützte Fasermaterialien nach Anspruch 1 oder 2, **dadurch gekennzeichnet, dass** es sich bei dem filmbildenden Bindemittel um Polyvinylacetat-Copolymere oder um Polyacrylate handelt.

4. Flammgeschützte Fasermaterialien nach einem oder mehreren der Ansprüche 1 bis 3, **dadurch gekennzeichnet, dass** das Mengenverhältnis von filmbildenden Bindemittel (100 %-ig) zu Melaminpolyphosphat (10 bis 1) zu (1 bis 5) beträgt.

5. Flammgeschützte Fasermaterialien nach einem oder mehreren der Ansprüche 1 bis 3, **dadurch gekennzeichnet, dass** das Mengenverhältnis von filmbildenden Bindemittel (100 %-ig) zu Melaminpolyphosphat (5 bis 1) zu (1 bis 3) beträgt.

6. Flammgeschützte Fasermaterialien nach einem oder mehreren der Ansprüche 1 bis 5, **dadurch gekennzeichnet, dass** in ihrer Brandschutzbeschichtung als weitere Komponenten Wasser sowie ggf. übliche Hilfs- und Zusatzstoffe enthalten sind.

7. Flammgeschützte Fasermaterialien nach einem oder mehreren der Ansprüche 1 bis 6, **dadurch gekennzeichnet, dass** in ihrer Brandschutzbeschichtung als Hilfs- und Zusatzstoffe Dispergiermittel, Schaummittel, Schaumstabilisatoren, Verdicker, Fungizide und/oder Entschäumer enthalten sind.

8. Flammgeschützte Fasermaterialien nach einem oder mehreren der Ansprüche 1 bis 7, **dadurch gekennzeichnet, dass** es sich dabei um Gewebe für Vorhänge, Teppichböden, Auto- und Eisenbahnsitzbezüge oder Kinderbettbezüge, bestehend aus Baumwolle, Cellulose-, Polyester-, Polyethylen-, Polyamid-, Polypropylenfasern und/oder anderen Fasergemischen handelt.

## Claims

1. Flame-retardant fiber materials, having a flame-retardant coating, comprising at least one film-forming binder and one flame retardant, wherein the flame retardant comprises melamine polyphosphate and wherein the film-forming binder is
homopolymers based on vinyl acetate,
copolymers based on vinyl acetate, ethylene and vinyl chloride,
copolymers based on vinyl acetate and on the vinyl ester of a long-chain, branched carboxylic acid,
copolymers based on vinyl acetate and di-n-butyl maleate,
copolymers based on vinyl acetate and acrylates, and/or
copolymers based on acrylates,
vinyltoluene-acrylate polymers,
styrene-acrylate polymers,
vinyl-acrylate copolymers, and/or
self-crosslinking polyurethane dispersions.

2. Flame-retardant fiber materials as claimed in claim 1, wherein the melamine polyphosphate has the formula (HMPO₃)ₙ, where M is melamine and n ≥ 2, in particular from 2 to 10,000.

3. Flame-retardant fiber materials as claimed in claim 1 or 2, wherein the film-forming binder is polyvinyl acetate copolymers or polyacrylates.

4. Flame-retardant fiber materials as claimed in one or more of claims 1 to 3, wherein the ratio between the amount of film-forming binder (100% strength) and melamine polyphosphate is from (10 to 1) to (1 to 5).

5. Flame-retardant fiber materials as claimed in one or more of claims 1 to 3, wherein the ratio between the amount of film-forming binder (100% strength) and melamine polyphosphate is from (5 to 1) to (1 to 3).

6. Flame-retardant fiber materials as claimed in one or more of claims 1 to 5, wherein further components present in their flame-retardant coating are water and also, if desired, conventional auxiliaries and additives.

7. Flame-retardant fiber materials as claimed in one or more of claims 1 to 6, wherein the auxiliaries and additives present in their flame-retardant coating comprise dispersing agents, foaming agents, foam stabilizers, thickeners, fungicides and/or antifoams.

8. Flame-retardant fiber materials as claimed in one or more of claims 1 to 7, which are fabrics for drapes, carpeting, covers for automobile seats or for railroad seats, or covers for children's beds, composed of cotton, cellulose fibers, polyester fibers, polyethylene fibers, polyamide fibers, polypropylene fibers and/or other fiber mixtures.

## Revendications

1. Matériaux fibreux ignifugés, comportant un revêtement ignifuge contenant au moins un liant filmogène et un agent d'ignifugation, **caractérisés en ce que** l'agent d'ignifugation contient du polyphosphate de mélamine, et **en ce que**, pour ce qui concerne le liant filmogène, il s'agit d'homopolymères à base d'acétate de vinyle, de copolymères à base d'acétate de vinyle, d'éthylène et de chlorure de vinyle, de copolymères à base d'acétate de vinyle et de l'ester vinylique d'un acide carboxylique ramifié à longue chaîne, de copolymères à base d'acétate de vinyle et de maléate de di-n-butyle, de copolymères à base d'acétate de vinyle et d'un acrylate, et/ou de copolymères à base d'un acrylate, d'un polymère vinyltoluène/acrylate, de polymères styrène/acrylate, de copolymères vinyl/acrylate et/ou de dispersions de polyuréthanne autoréticulables.

2. Matériaux fibreux ignifugés selon la revendication 1, **caractérisés en ce que** le polyphosphate de mélamine a la formule (HMPO₃)ₙ dans laquelle M est la mélamine et n ≥ 2, en particulier n est compris entre 2 et 10 000.

3. Matériaux fibreux ignifugés selon la revendication 1 ou 2, **caractérisés en ce que**, pour ce qui concerne le liant filmogène, il s'agit de copolymères de poly(acétate de vinyle) ou de polyacrylates.

4. Matériaux fibreux ignifugés selon l'une ou plusieurs des revendications 1 à 3, **caractérisés en ce que** le rapport en poids du liant filmogène (à 100 %) au polyphosphate de mélamine est de (10 à 1) : (1 à 5).

5. Matériaux fibreux ignifugés selon l'une ou plusieurs des revendications 1 à 3, **caractérisés en ce que** le rapport en poids du liant filmogène (à 100 %) au polyphosphate de mélamine est de (5 à 1):(1 à 3).

6. Matériaux fibreux ignifugés selon l'une ou plusieurs des revendications 1 à 5, **caractérisés en ce que** le revêtement ignifuge contient, en tant qu'autres composants, de l'eau et éventuellement des additifs et adjuvants usuels.

7. Matériaux fibreux ignifugés selon l'une ou plusieurs des revendications 1 à 6, **caractérisés en ce que** le revêtement ignifuge contient en tant qu'additifs et adjuvants des dispersants, des agents d'expansion, des stabilisants de mousse, des épaississants, des fongicides et/ou des antimousses.

8. Matériaux fibreux ignifugés selon l'une ou plusieurs des revendications 1 à 7, **caractérisés en ce qu'**il s'agit, pour ce qui est de ces matériaux, de tissus pour rideaux, moquettes, garnitures pour sièges d'automobiles et de voitures de chemin de fer ou de taies pour lits d'enfants, constitués de coton, de fibres de cellulose, de polyester, de polyéthylène, de polyamide, de polypropylène et/ou d'autres mélanges de fibres.
